# EUROPÄISCHE PATENTSCHRIFT

(11) **EP 1 731 484 B1**
(45) Veröffentlichungstag und Bekanntmachung des Hinweises auf die Patenterteilung: **17.10.2007**
(21) Anmeldenummer: 06009590.8
(22) Anmeldetag: 10.05.2006
(51) Int. Cl.: C01G 29/00, B01J 23/18, B01J 35/12

(54) **Wässrige Lösung aus einer Bismutverbindung und einer Polyhydroxyverbindung sowie Verfahren zu ihrer Herstellung**
Aqueous solution consisting of a bismuth compound and a polyhydroxy compound and method for its preparation
Solution aqueuse d'un composé de bismuth et d'un composé polyhydroxy et son procédé de préparation

(30) Priorität: 08.06.2005 DE 202005009036 U
(43) Veröffentlichungstag der Anmeldung: 13.12.2006
(73) Patentinhaber: HEK GmbH, 23560 Lübeck (DE)
(72) Erfinder: Volz, Wolfgang, Dr., 23611 Bad Schwartau (DE)
(74) Vertreter: Richter, Joachim

(56) Entgegenhaltungen:
- FR-A- 2 115 725
- US-A- 1 937 365

## Beschreibung

Die Erfindung betrifft eine wässrige Lösung aus einer Bismutverbindung und einer Polyhydroxyverbindung sowie Verfahren zu ihrer Herstellung.

Bismutverbindungen finden vielfach in der pharmazeutischen Industrie, der Elektroindustrie, der Glasindustrie und als Katalysator in der Lack- und Automobilindustrie Verwendung. Dabei sind sie erfahrungsgemäß nicht oder kaum in Wasser löslich. Bismut neigt aufgrund seiner chemischen Stellung im Periodensystem zur Hydrolyse seiner Salze unter Bildung von Oxyverbindungen (Subverbindungen). Die Hydrolyse erfolgt bereits bei niedrigen pH-Werten und führt zu unlöslichen Produkten. Als Beispiel seien Bismutsubnitrat, -subsalicylat, -oxychlorid und Bismutsubcarbonat genannt.

Um der Hydrolyse zu begegnen, können wässrige Lösungen von Bismutsalzen in starken Säuren hergestellt sein. Dazu werden starke Mineralsäuren wie Salpetersäure, Perchlorsäure oder Salzsäure oder aber auch Säuren wie Methansulfonsäure, Triflormethansulfonsäure und Essigsäure verwendet. Diese Lösungen enthalten stets einen Überschuss der Säure. Die Lösungen haben dabei sehr niedrige pH-Werte und enthalten viele zusätzliche Ionen, die bei einigen Anwendungen stören. Verdünnt man diese sauren Lösungen, so fallen in den meisten Fällen durch Hydrolyse die entsprechenden Oxyverbindungen (Subverbindungen) aus.

Wasserlösliche Bismutverbindungen sind als Doppelsalze aus dem Stand der Technik bekannt. So sind Bismutcitrate in Lösungen von Alkali- oder Ammoniumcitraten oder Gemischen von Alkali- oder Ammoniumcitraten löslich. Diese Verbindungen werden in der pharmazeutischen Industrie eingesetzt, beispielsweise in dem Medikament DeNol. Diese Lösungen zeigen bei höheren pH-Werten eine gewisse Stabilität als es bei den oben genannten sauren Lösungen der Fall ist. Sie enthalten aber auch eine Vielzahl weitere lonen, insbesondere kleiner lonen mit hoher Leitfähigkeit, die bei einigen Anwendungen unerwünscht sind. Weiterhin zeigen die ammoniumhaltigen Doppelsalze einen unerwünschten Geruch von Ammoniak.

Wasserlösliche Verbindungen von Bismut sind auch mit Komplexbildnern möglich. Aus dem Stand der Technik sind Lösungen von Bismut mit Alkaliethylendiamintetraacetat oder von Alkali-trinitriloacetat bekannt. Diese Lösungen enthalten ebenfalls große Mengen an Fremdionen und die Verwendung der Komplexbildner ist bezogen auf die Anwendung und die Umwelt nicht unproblematisch.

Um die Nachteile der oben genannten wässrigen Lösung zu umgehen, wurden Bismutlösungen aus einer Bismutverbindung und einer Polyhydroxyverbindung entwickelt. Aus der Frühzeit der wissenschaftlichen Literatur sind Komplexe von Bismutnitrat-pentahydrat mit Mannit, Sorbit und Glycerin bekannt.

Allerdings sind solche Bismutlösungen aus einer Bismutverbindung und einer Polyhydroxyverbindung mit dem Nachteil behaftet, dass sie nicht sehr stabil sind und ebenfalls niedrige pH-Werte aufweisen, wodurch die Wasserlöslichkeit dieser Komplexe nur sehr eingeschränkt gegeben ist.

Aus US 1 937 365 A ist eine Zubereitung für ein Haarfärbemittel, bestehend aus einer ersten Lösung und einer zweiten Lösung, bekannt. Die erste Lösung enthält eine wasserlösliche Bismut-Verbindung in einem Gemisch aus 80 % Glycerin und 20 % Wasser, während die zweite Lösung eine schwefelhaltige Verbindung enthält. Diese beiden Lösungen werden unmittelbar vor dem Aufbringen auf das Haar vermischt. Der pH-Wert der beispielhaften ersten Lösung liegt bei 0,45, also deutlich unter 1.

FR 2 115 725 A offenbart eine Lösung aus Bismutnitrat-Pentahydrat in einer wässrigen Sorbitollösung. Der pH-Wert dieser Lösung ist 0,99, wobei die Konzentration an Bismut-Ionen vergleichsweise gering ist. Die Lösung wird nach ihrer Herstellung neutralisiert.

Es ist daher Aufgabe der Erfindung, eine wässrige Lösung aus einer Bismutverbindung mit vergleichsweise hoher Konzentration und einer Polyhydroxyverbindung zur Verfügung zu stellen, die eine erhöhte Stabilität und Wasserlöslichkeit aufweist.

Diese Aufgabe wird durch die Merkmale des Anspruchs 1 gelöst.

Es hat sich gezeigt, dass wässrige Lösungen aus einem Bismutsalz und einer Polyhydroxyverbindung mit einem pH-Wert größer 1 erhöhte Stabilität und Wasserlöslichkeit aufweisen.

Es ist dabei von Vorteil, dass die Bismutverbindung ein Bismutsalz und die Polyhydroxyverbindungen Zuckeraldosen oder Zuckerketosen sind. Als Bismutsalze kommen dabei Bismutsubnitrat, Bismuthydroxid, Bismutoxid, Bismutsubcarbonat, Bismutsubsalicylat und Bismutcitrat in Betracht, wohingegen als Zuckeraldosen und Zuckerketosen Fructose, Xylose, Arabinose, Galactose, Glucose sowie Mannose in Frage kommen.

Es wurde gefunden, dass je nach verwendeten Bismutverbindungen und Polyhydroxyverbindungen wässrige Lösungen mit unterschiedlichen Bismutgehalten erhalten werden. Hohe Bismutgehalte sind bei wässrigen Lösungen von Bismutsubnitrat und Zuckeralkoholen gegeben. Hier liegen die Bismutgehalte vorzugsweise bei 100 bis 300 g/l. Anspruch 3 sieht daher vor, dass die Bismutverbindung als Bismutsubnitrat und die Polyhydroxyverbindung als Zuckeralkohol vorliegen. Die Zuckeralkohole können Dulcitol, Sorbitol, Xylitol oder auch Mannitol sein.

Als Vorteil hat sich auch erwiesen, dass die Lösungen mit Zuckeralkoholen meist farblos sind.

Auch kann die Bismutverbindung ein Bismutsalz und die Polyhydroxyverbindung ein Disaccharid oder Glycerin sein. Als Disaccharide kommen Sucrose, Lactose und Maltose in Betracht. Es hat sich gezeigt, dass wässrige Lösungen aus einer Bismutverbindung und einem Disaccharid gelbe Lösungen ergeben können.

Die Polyhydroxyverbindung kann eine Mischung aus Zuckeraldosen, Zuckerketosen, Zuckeralkoholen, Disaccharide und Glycerin sein, oder die Polyhydroxyverbindung kann eine Mischung aus einer Kombination von Zuckeraldosen, Zuckerketosen, Zuckeralkoholen, Disaccharide und Glycerin sein.

Es wurde gefunden, dass Lösungen aus Bismuthydroxid und Bismutsubnitrat hohe Bismutgehalte aufweisen und damit bevorzugt eingesetzt werden können. Vorzugsweise ist daher das Bismutsalz ein Bismuthydroxid oder ein Bismutsubnitrat.

Weiterhin ist es von Vorteil, dass der Zuckeralkohol ein Sorbitol ist. Bei einer wässrigen Lösung aus Bismutsubnitrat und Sorbitol wurde gefunden, dass das Verhältnis von Sorbitol zu dem gelösten Bismut unabhängig von der Konzentration ungefähr konstant ist. Eine Erhöhung der Sorbitolkonzentration führte damit zu einer Erhöhung des Bismutgehaltes. Durch Einsetzen eines Überschusses an Bismutverbindungen ist somit auch sichergestellt, dass kein eventuell störender Überschuss an Polyhydroxyverbindungen vorhanden ist. Anspruch 8 sieht daher vor, dass das Sorbitol erhöht ist und ein Überschuss Bismutsalz vorliegt.

Die Bismutverbindungen und die Polyhydroxyverbindungen sind 1 bis 5 Stunden und 40 bis 100 °C erwärmte Reaktionsprodukte, wobei ein Überschuss an Bismutverbindungen vorliegt. Auch können die Bismutverbindungen und die Polyhydroxyverbindungen vorzugsweise 1 bis 3 Stunden und vorzugsweise 60 bis 80 °C erwärmte Reaktionsprodukte sein. Die genannten Zeit- und Temperaturintervalle können auch variieren, da auch andere Intervalle denkbar sind.

Nach der Reaktion kann noch eventuell vorhandener Feststoff von der Lösung trennbar sein. Dies kann durch Filtration, Sedimentation oder Zentrifugieren erfolgen. Zweckmäßiger Weise ist daher die Lösung von Feststoff getrennt. Weiterhin besteht die Möglichkeit, die erfindungsgemäße wässrige Lösung zu trocknen.

Ein Verfahren zur Herstellung einer Bismutlösung mit einer Bismutverbindung und einer Polyhydroxyverbindung ist Gegenstand des Anspruchs 11, wonach als Bismutverbindung ein Bismutsalz eingesetzt wird und für die Lösung ein pH-Wert größer 1 eingestellt wird, wobei die Umsetzung der Bismutverbindung mit der Polyhydroxyverbindung in wässriger Lösung erfolgt und die Bismutverbindung mit einer Lösung der Polyhydroxyverbindung in Wasser vorzugsweise für 1 bis 5 Stunden unter Erwärmung vorzugsweise bei 40 bis 100° C zur Reaktion gebracht wird.

Vorteilhaft ist dabei ein Verfahren, bei dem als Bismutverbindung Bismutsubnitrat und als Polyhydroxyverbindung Zuckeralkohol eingesetzt wird, da hiermit die höchsten Bismutgehalte zu erreichen sind. Die Bismutgehalte liegen hierbei vorzugsweise bei 100 bis 300 g/l.

Es wurde gefunden, dass das erfindungsgemäße Verfahren bei Einsatz von Bismuthydroxid und Bismutsubnitrat hohe Bismutgehalte aufweist. Auch zeigt das erfindungsgemäße Verfahren, dass die Konzentration des Bismuts in der Lösung durch Erhöhung der Konzentration der Polyhydroxyverbindung erhöht wird. Am Beispiel der Umsetzung des Bismutsubnitrats mit Sorbitol wurde gefunden, dass das Verhältnis von Sorbitol zu dem gelösten Bismut unabhängig von der Konzentration ungefähr konstant ist. Eine Erhöhung der Sorbitolkonzentration führte damit zu einer Erhöhung des Bismutgehaltes. Durch Einsetzen eines Überschusses an Bismutverbindung kann somit auch sichergestellt werden, dass kein eventuell störender Überschuss an Polyhydroxyverbindungen bei dem erfindungsgemäßen Verfahren vorhanden ist. Der Überschuss an nicht gelöster Bismutverbindung in dem erfindungsgemäßen Verfahren kann z. Bsp. durch Filtrieren einfach von der Lösung getrennt werden.

Weiterhin wurde bei dem erfindungsgemäßen Verfahren gefunden, dass das Filtrat in einer Lösung aus Bismutsubnitrat und Polyhydroxyverbindung nur zu einem kleinen Teil ionisch vorliegt. Das Verhältnis von ionischem zum gesamten Nitrat in der Lösung beträgt ca. 1 : 10 mol/l. Der nicht-ionische Nitratanteil ist vermutlich kovalent an das Bismut gebunden. Solche Lösungen enthalten also trotz des hohen Bismutanteils nur einen kleinen Anteil an anderen ionischen Substanzen.

Weiterhin ist eine Verwendung einer Bismutlösung gemäß dem Verfahren nach einem der Ansprüche 11 bis 20 als Katalysator in der Lack- und Automobilindustrie vorgesehen. Wegen der nichttoxischen Eigenschaften des Bismuts werden dadurch toxische Verbindungen von Blei und Zinn ersetzt. Organische Lösungsmittel werden aufgrund ihrer Umwelt- und Gesundheitsproblematik durch Wasser ersetzt. Bisher verwendete Bismutverbindungen sind Salze des Bismuts mit Methansulfonsäure, Milchsäure, Salicylsäure und Dimethylpropionsäure.

Im Folgenden werden beispielhaft Zubereitungen von der erfindungsgemäßen wässrigen Lösung erläutert.

### Beispiel 1:

In einem laborüblichen Becherglas werden 300 g Sorbitol in 1.000 ml deionisiertem Wasser gelöst. Die Lösung wird auf eine Temperatur von 70 °C gebracht. Dann werden unter Rühren 400 g Bismutsubnitrat eingemischt. Die Mischung wird eine Stunde lang kräftig gerührt und dabei auf 86 °C erhitzt. Nach der Reaktionszeit wird die Lösung filtriert und mit Wasser auf ein endgültiges Volumen von 1.100 ml gebracht. Man erhält somit eine klare Lösung mit einem Bismutgehalt von 230 g/l und einem pH-Wert von 1,7.

### Beispiel 2:

In einem laborüblichen Becherglas werden 15 g Saccharose in 50 ml deionisiertem Wasser gelöst. Die Lösung wird auf eine Temperatur von 50 °C gebracht. Dann werden unter Rühren 20 g Bismuthydroxid eingemischt. Die Mischung wird 1 h lang kräftig gerührt und dabei auf 76 °C erhitzt. Nach der Reaktionszeit wird die Lösung zentrifugiert. Somit wird eine klare Lösung mit einem Bismutgehalt von 30 g/l und einem pH-Wert von 6,7 erhalten.

## Patentansprüche

1. Wässrige Lösung aus einer Bismutverbindung und einer Polyhydroxyverbindung,
**dadurch gekennzeichnet,**
**dass** die Bismutverbindung ein Bismutsalz ist und die Lösung einen pH-Wert größer 1 aufweist; und
die Bismutverbindung und die Polyhydroxyverbindung 1 bis 5 Stunden und 40 bis 100° C erwärmte Reaktionsprodukte sind, wobei ein Überschuss der Bismutverbindung vorliegt.

2. Wässrige Lösung nach Anspruch 1,
**dadurch gekennzeichnet,**
**dass** die Polyhydroxyverbindung eine Zuckeraldose oder eine Zuckerketose ist.

3. Wässrige Lösung nach Anspruch 1,
**dadurch gekennzeichnet,**
**dass** die Bismutverbindung als Bismutsubnitrat und die Polyhydroxyverbindung als Zuckeralkohol vorliegt.

4. Wässrige Lösung nach Anspruch 1,
**dadurch gekennzeichnet,**
**dass** die Polyhydroxyverbindung ein Disaccharide oder Glycerin ist.

5. Wässrige Lösung nach Anspruch 1,
**dadurch gekennzeichnet,**
**dass** die Polyhydroxyverbindung eine Mischung aus Zuckeraldosen, Zuckerketosen, Zuckeralkoholen, Disacchariden und Glycerin ist oder die Polyhydroxyverbindung eine Mischung aus einer Kombination von Zuckeraldosen, Zuckerketosen, Zuckeralkoholen, Disacchariden und Glycerin ist.

6. Wässrige Lösung nach Anspruch 1,
**dadurch gekennzeichnet,**
**dass** das Bismutsalz ein Bismuthydroxid oder ein Bismutsubnitrat ist.

7. Wässrige Lösung nach Anspruch 3,
**dadurch gekennzeichnet,**
**dass** der Zuckeralkohol ein Sorbitol ist.

8. Wässrige Lösung nach Anspruch 7,
**dadurch gekennzeichnet,**
**dass** das Sorbitol erhöht ist und ein Überschuss Bismutsalz vorliegt.

9. Wässrige Lösung nach einem der vorstehenden Ansprüche,
**dadurch gekennzeichnet,**
**dass** die Bismutverbindungen und die Polyhydroxyverbindungen vorzugsweise 1 bis 3 Stunden und vorzugsweise 60 bis 80 °C erwärmte Reaktionsprodukte sind.

10. Wässrige Lösung nach einem der vorstehenden Ansprüche,
**dadurch gekennzeichnet,**
**dass** die wässrige Lösung von Feststoff getrennt ist.

11. Verfahren zur Herstellung einer Bismutlösung aus einer Bismutverbindung und einer Polyhydroxyverbindung,
**dadurch gekennzeichnet,**
**dass** als Bismutverbindung ein Bismutsalz eingesetzt wird und für die Lösung ein pH-Wert größer 1 eingestellt wird; und
**dass** die Umsetzung der Bismutverbindung mit der Polyhydroxyverbindung in wässriger Lösung erfolgt und die Bismutverbindung mit einer Lösung der Polyhydroxyverbindung in Wasser vorzugsweise für 1 bis 5 Stunden unter Erwärmung vorzugsweise bei 40 bis 100 °C zur Reaktion gebracht wird.

12. Verfahren nach Anspruch 11,
**dadurch gekennzeichnet,**
**dass** als Polyhydroxyverbindung eine Zuckeraldose oder Zuckerketose eingesetzt wird.

13. Verfahren nach Anspruch 11,
**dadurch gekennzeichnet,**
**dass** als Bismutverbindung ein Bismutsubnitrat und als Polyhydroxyverbindung ein Zuckeralkohol eingesetzt wird.

14. Verfahren nach Anspruch 11,
**dadurch gekennzeichnet,**
**dass** als Polyhydroxyverbindung ein Disaccharid oder Glycerin eingesetzt wird.

15. Verfahren nach Anspruch 11,
**dadurch gekennzeichnet,**
**dass** als Polyhydroxyverbindung eine Mischung aus Zuckeraldosen, Zuckerketosen, Zuckeralkoholen, Disacchariden und Glycerin oder als Polyhydroxyverbindung eine Mischung aus einer Kombination von Zuckeraldosen, Zuckerketosen, Zuckeralkoholen, Disacchariden und Glycerin eingesetzt werden.

16. Verfahren nach Anspruch 11,
**dadurch gekennzeichnet,**
**dass** als Bismutsalz ein Bismuthydroxid oder ein Bismutsubnitrat eingesetzt wird.

17. Verfahren nach Anspruch 13,
**dadurch gekennzeichnet,**
**dass** als Zuckeralkohol ein Sorbitol eingesetzt wird.

18. Verfahren nach Anspruch 17,
**dadurch gekennzeichnet,**
**dass** Sorbitol erhöht wird und ein Überschuss Bismutsalz eingesetzt wird.

19. Verfahren nach einem der Ansprüche 11 bis 18,
**dadurch gekennzeichnet,**
**dass** die Bismutverbindungen und die Polyhydroxyverbindungen vorzugsweise für 1 bis 3 Stunden unter Erwärmung vorzugsweise bei 60 bis 80 °C zur Reaktion gebracht werden.

20. Verfahren nach einem der Ansprüche 11 bis 19,
**dadurch gekennzeichnet,**
**dass** nach der Reaktion noch vorhandener Feststoff von der Lösung, insbesondere durch Filtration, Sedimentation oder Zentrifugieren getrennt wird.

21. Verwendung einer Bismutlösung hergestellt durch ein Verfahren nach einem der Ansprüche 11 bis 20, als Katalysator in der Lack- und Automobilindustrie.

## Claims

1. Aqueous solution consisting of a bismuth compound and a polyhydroxy compound,
**characterized in that**
the bismuth compound is a bismuth salt and the solution has a pH value of greater than 1; and
the bismuth compound and the polyhydroxy compound are reaction products heated for 1 to 5 hours and at 40 to 100° C, with an excess of the bismuth compound being present.

2. Aqueous solution according to Claim 1,
**characterized in that**
the polyhydroxy compound is a sugar aldose or a sugar ketose.

3. Aqueous solution according to Claim 1,
**characterized in that**
the bismuth compound is present as bismuth subnitrate and the polyhydroxy compound is present as sugar alcohol.

4. Aqueous solution according to Claim 1,
**characterized in that**
the polyhydroxy compound is a disaccharide or glycerin.

5. Aqueous solution according to Claim 1,
**characterized in that**
the polyhydroxy compound is a mixture of sugar aldoses, sugar ketoses, sugar alcohols, disaccharides and glycerin or the polyhydroxy compound is a mixture of a combination of sugar aldoses, sugar ketoses, sugar alcohols, disaccharides and glycerin.

6. Aqueous solution according to Claim 1,
**characterized in that**
the bismuth salt is a bismuth hydroxide or a bismuth subnitrate.

7. Aqueous solution according to Claim 3,
**characterized in that**
the sugar alcohol is a sorbitol.

8. Aqueous solution according to Claim 7,
**characterized in that**
the sorbitol is high and there is an excess of bismuth salt.

9. Aqueous solution according to one of the preceding Claims,
**characterized in that**
the bismuth compounds and the polyhydroxide compounds are reaction products preferably heated for 1 to 3 hours and preferably at 60 to 80 °C.

10. Aqueous solution according to one of the preceding Claims,
**characterized in that**
the aqueous solution is separated from solid material.

11. Method for preparing a bismuth solution from a bismuth compound and a polyhydroxide compound,
**characterized in that**
a bismuth salt is used as bismuth compound and a pH value of greater than 1 is adjusted for the solution; and
**in that** the reaction of the bismuth compound with the polyhydroxy compound takes place in aqueous solution and the bismuth compound is reacted with a solution of the polyhydroxy compound in water preferably for 1 to 5 hours under heating at preferably 40 to 100°C.

12. Method according to Claim 11,
**characterized in that**
a sugar aldose or sugar ketose is used as polyhydroxy compound.

13. Method according to Claim 11,
**characterized in that**
a bismuth subnitrate is used as bismuth compound and a sugar alcohol is used as polyhydroxy compound.

14. Method according to Claim 11,
**characterized in that**
a disaccharide or glycerin is used as polyhydroxy compound.

15. Method according to Claim 11,
**characterized in that**
a mixture of sugar aldoses, sugar ketoses, sugar alcohols, disaccharides and glycerin is used as polyhydroxy compound or a mixture of a combination of sugar aldoses, sugar ketoses, sugar alcohols, disaccharides and glycerin is used as polyhydroxy compound.

16. Method according to Claim 11,
**characterized in that**
a bismuth hydroxide or a bismuth subnitrate is used as bismuth salt.

17. Method according to Claim 13,
**characterized in that**
a sorbitol is used as sugar alcohol.

18. Method according to Claim 17,
**characterized in that**
sorbitol is increased and an excess of bismuth salt is used.

19. Method according to one of Claims 11 to 18,
**characterized in that**
the bismuth compounds and the polyhydroxy compounds are preferably reacted for 1 to 3 hours under heating at preferably 60 to 80 °C.

20. Method according to one of Claims 11 to 19,
**characterized in that**
solid material still present subsequent to the reaction is separated from the solution, in particular by way of filtration, sedimentation or centrifugation.

21. Use of a bismuth solution, prepared by a method according to one of Claims 11 to 20, as catalyst in the lacquer and automotive industry.

## Revendications

1. Solution aqueuse d'un composé de bismuth et d'un composé polyhydroxylé,
**caractérisée en ce que**
le composé de bismuth est un sel de bismuth et le pH de la solution est supérieur à 1; et
le composé de bismuth et le composé polyhydroxylé sont des produits d'une réaction qui ont été chauffés à une température comprise entre 40 et 100 °C pendant 1 à 5 heures, le composé de bismuth y étant excédentaire.

2. Solution aqueuse selon la revendication 1,
**caractérisée en ce que**
le composé polyhydroxylé est un sucre de type aldose ou de type cétose.

3. Solution aqueuse selon la revendication 1,
**caractérisée en ce que**
le composé de bismuth est présent sous forme de sous-nitrate de bismuth et le composé polyhydroxylé est présent sous forme d'un sucre-alcool.

4. Solution aqueuse selon la revendication 1,
**caractérisée en ce que**
le composé polyhydroxylé est un disaccharide ou du glycérol.

5. Solution aqueuse selon la revendication 1,
**caractérisée en ce que**
le composé polyhydroxylé est un mélange élaboré à partir de sucres de type aldose, de sucres de type cétose, de sucre-alcools, de disaccharides et de glycérol ou le composé polyhydroxylé est un mélange entre sucres de type aldose, sucres de types cétose, sucre-alcools, disaccharides et glycérols, les constituants précités étant employés d'une manière combinée.

6. Solution aqueuse selon la revendication 1,
**caractérisée en ce que**
le sel de bismuth est un hydroxyde de bismuth ou un sous-nitrate de bismuth.

7. Solution aqueuse selon la revendication 3,
**caractérisé en ce que**
le sucre-alcool est un sorbitol.

8. Solution aqueuse selon la revendication 7,
**caractérisée en ce que**
le sorbitol est augmenté et le sel de bismuth est présent en excédent.

9. Solution aqueuse selon l'une quelconque des revendications précédentes,
**caractérisée en ce que**
les composés de bismuth et les composés polyhydroxylés sont, de préférence, des produits d'une réaction qui ont été chauffés à une température comprise entre 60 et 80 °C pendant 1 et 3 heures.

10. Solution aqueuse selon l'une quelconque des revendications précédentes,
**caractérisée en ce que**
la solution aqueuse est séparée des solides.

11. Procédé de fabrication d'une solution de bismuth à partir d'un composé de bismuth et d'un composé polyhydroxylé,
**caractérisé en ce que**
le composé de bismuth est mis en oeuvre sous d'un sel de bismuth et le pH de la solution est ajusté de manière à être supérieur à 1 ; et que la réaction entre le composé de bismuth et le composé polyhydroxylé se déroulé en solution aqueuse et que l'on fait réagir le composé de bismuth avec une solution du composé polyhydroxylé dans de l'eau, de préférence en chauffant à une température comprise entre 40 et 100 °C pendant une durée qui préférentiellement est comprise entre 1 et 5 heures.

12. Procédé selon la revendication 11,
**caractérisé en ce que**
le composé polyhydroxylé est mis en oeuvre sous forme d'un sucre de type aldose ou de type cétose.

13. Procédé selon la revendication 11,
**caractérisé en ce que**
le composé de bismuth est mis en oeuvre sous forme d'un sous-nitrate de bismuth et le composé polyhydroxylé est mis en oeuvre sous forme d'un sucre-alcool.

14. Procédé selon la revendication 11,
**caractérisé en ce que**
le composé polyhydroxylé est mis en oeuvre sous forme d'un disaccharide ou de glycérol.

15. Procédé selon la revendication 11,
**caractérisé en ce que**
le composé polyhydroxylé est mis en oeuvre sous forme d'un mélange élaboré à partir de sucres de type aldose, de sucres de type cétose, de sucre-alcools, de disaccharides et de glycérol ou le composé polyhydroxylé est mis en oeuvre sous forme d'un mélange entre sucres de type aldose, sucres de types cétose, sucre-alcools, disaccharides et glycérols, les constituants précités étant employés d'une manière combinée.

16. Procédé selon la revendication 11,
**caractérisé en ce que**
le sel de bismuth est mis en oeuvre sous forme d'un hydroxyde de bismuth ou d'un sous-nitrate de bismuth.

17. Procédé selon la revendication 13,
**caractérisé en ce que**
le sucre-alcool est mis en oeuvre sous forme d'un sorbitol.

18. Procédé selon la revendication 17,
**caractérisé en ce que**
le sorbitol est augmenté et le sel de bismuth est mis en oeuvre en excédent.

19. Procédé selon l'une quelconque des revendications 11 à 18,
**caractérisé en ce que**
l'on fait réagir les composés de bismuth et les composés polyhydroxylés en les chauffant, de préférence, à une température comprise entre 60 et 80 °C pendant durée préférentiellement comprise entre 1 et 3 heures.

20. Procédé selon l'une quelconque des revendications 11 à 19,
**caractérisé en ce qu'**
après la réaction, un éventuel résidu solide est séparé de la solution, notamment par filtration, sédimentation et centrifugation.

21. Utilisation d'une solution de bismuth, préparée par un procédé selon l'une quelconque des revendications 11 à 20, en tant que catalyseur dans l'industrie des vernis et l'industrie automobile.
